# EUROPEAN PATENT SPECIFICATION

(11) **EP 3 387 968 B1**
(45) Date of publication and mention of the grant of the patent: **22.07.2020**
(21) Application number: 18150918.3
(22) Date of filing: 10.01.2018
(51) Int. Cl.: A47J 37/06

(54) **GRILL DEVICE**
GRILLVORRICHTUNG
DISPOSITIF DE GRILL

(30) Priority: 14.04.2017 CN 201710242734
(43) Date of publication of application: 17.10.2018
(73) Proprietor: Tsann Kuen (Zhangzhou) Enterprise Co., Ltd., Fujian 363107 (CN)
(72) Inventor: WU, Linzhe, Zhangzhou, Fujian, 363107 (CN); WU, Chunyu, Zhangzhou, Fujian, 363107 (CN)
(74) Representative: Hübner, Gerd

(56) References cited:
- WO-A1-2016/119691
- GB-A- 338 353
- GB-A- 441 336
- US-A1- 2017 049 267

## Description

The disclosure relates to a grill device, and more particularly to a grill device for cooking food.

Among various types of grill devices, waffle iron is a device particularly used for making waffle, which is made from a batter containing egg, flour, sugar, milk, etc. Examples of various types of waffles are Belgian waffle and Liege waffle. A conventional waffle iron includes a lower grill unit and an upper grill unit that are hinged together and that cooperatively define a cooking space therebetween. The upper grill unit includes an upper grill plate that is gridded. The lower grill unit includes a lower grill plate that corresponds in shape to the upper grill plate. Each of the lower and upper grill plates has a grill surface. To make a waffle, first the upper grill unit is pivoted upward, and a batter is poured onto the grill surface of the lower grill plate. Afterwards, the upper grill unit is pivoted downward to cover the lower grill plate, and the upper and lower grill plates are heated by heating elements of the upper and lower grill units for heating the batter to form a waffle.

During waffle making, usually the batter is randomly poured onto the lower grill plate, and the batter cannot spread quickly and evenly on the grill surface of the lower grill plate by itself. Furthermore, the fluidity of the batter decreases upon contacting the heated lower grill plate during pouring of the batter. Therefore, it is relatively difficult to obtain a waffle having a uniform thickness and without uneven edges.

US 2017/049267 A1 and WO 2016/119691 A1 disclose grill devices with a lower grill plate according to the preamble of claim 1.

An object of the disclosure is to provide a lower grill plate that can alleviate at least one of the drawback of the prior art.

This object is achieved by a lower grill plate comprising the features of claim 1, being adapted for use in a grill device and is adapted to be disposed at a position lower than a feed opening of the grill device. The lower grill plate includes at least a plate body and a flow-diverging stage. The plate body has a central portion that is adapted to be positioned under and aligned with the feed opening of the grill device, and a surrounding portion that surrounds the central portion. The flow-diverging stage protrudes upwardly from the central portion of the plate body, and has a flow-diverging convex surface that is adapted to face the feed opening of the grill device and that is for diverging flow of a fluid material which flows from the feed opening onto the plate body. The flow-diverging convex surface has a top end positioned higher than the plate body.

Another object of the disclosure is to provide a grill device that can alleviate at least one of the drawback of the prior art.

This object is achieved by a grill device according to claim 12 including a lower grill unit and an upper grill unit. The lower grill unit includes a lower seat, the aforementioned lower grill plate, and a heating element disposed for heating the lower grill plate. The lower grill plate is coupled to a top end portion of the lower seat. The upper grill unit is openably connected to the lower grill unit, and has the feed opening which corresponds in position to the flow-diverging convex surface of the flow-diverging stage of the lower grill plate.

Other features and advantages of the disclosure will become apparent in the following detailed description of the embodiments with reference to the accompanying drawings, of which:
Figure 1 is a sectional view illustrating a first embodiment of a grill device according to the disclosure;
Figure 2 is a perspective view illustrating a lower grill plate of the first embodiment;
Figure 3 is a top view illustrating the lower grill plate of the first embodiment;
Figure 4 is a side view illustrating the lower grill plate of the first embodiment;
Figure 5 is a side view illustrating a lower grill plate of a second embodiment of the grill device according to the disclosure;
Figure 6 is a top view illustrating the lower grill plate of the second embodiment;
Figure 7 is a perspective view illustrating a lower grill plate of an embodiment of the grill device not according to the invention; and
Figure 8 is a side view illustrating the lower grill plate of Figure 7.

Before the disclosure is described in greater detail, it should be noted that where considered appropriate, reference numerals or terminal portions of reference numerals have been repeated among the figures to indicate corresponding or analogous elements, which may optionally have similar characteristics.

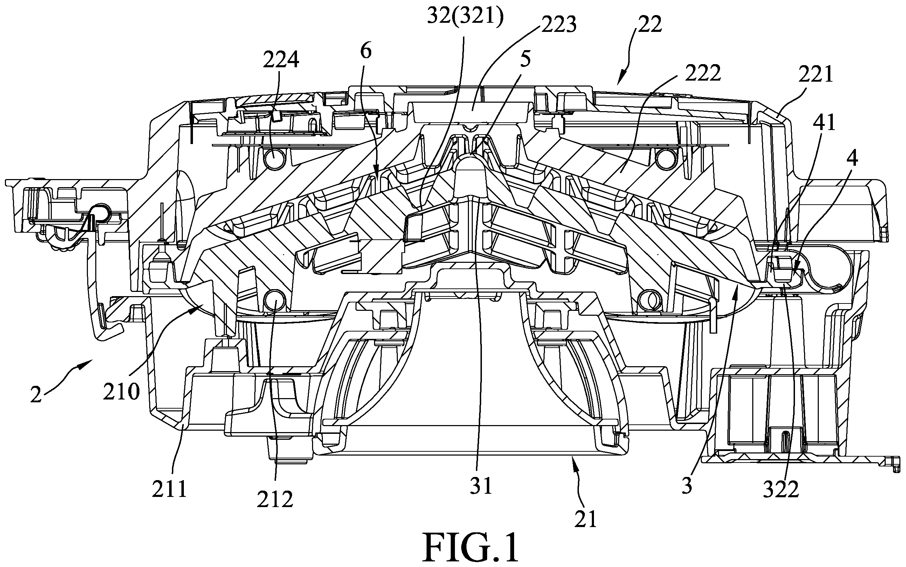

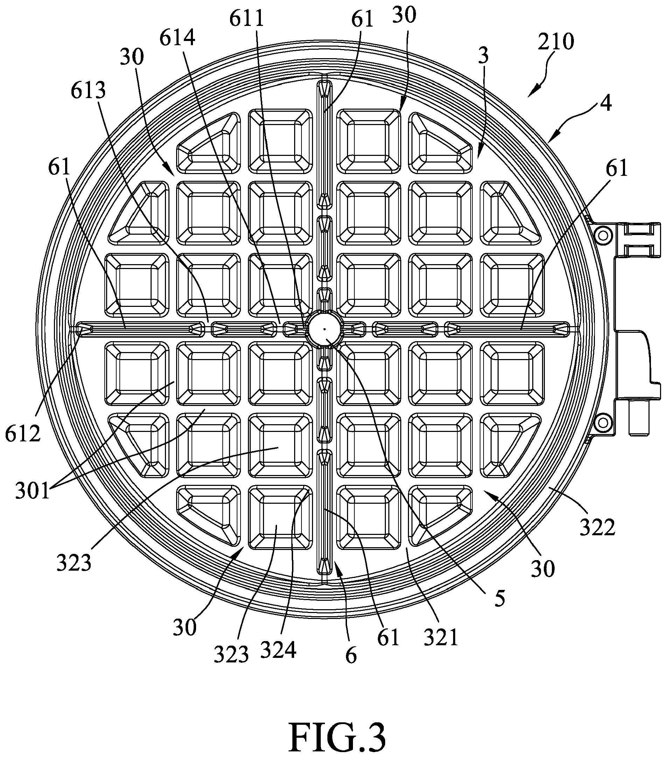

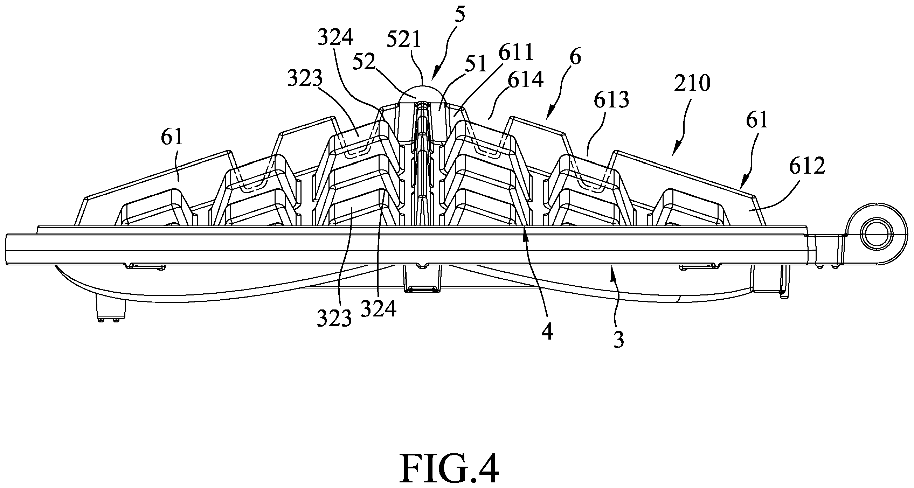

Referring to Figures 1 to 4, the first embodiment of a grill device according to the disclosure is configured as a waffle iron that can heat a fluid material (i.e., a batter) to form a waffle. The grill device includes a lower grill unit 21, and an upper grill unit 22 openably connected to the lower grill unit 21.

The lower grill unit 21 includes a lower seat 211, a lower grill plate 210 coupled to a top end portion of the lower seat 211, and a heating element 212 disposed for heating the lower grill plate 210.

The upper grill unit 22 has an upper seat 221, an upper grill plate 222 coupled to a bottom end portion of the upper seat 221, a feed opening 223 extending through the upper seat 221 and the upper grill plate 222, and a heating element 224 disposed for heating the upper grill plate 222. The feed opening 223 is disposed to correspond in position to a center part of the lower grill plate 210, and is for flowing of the fluid material therethrough and onto the lower grill plate 210.

The lower grill plate 210 is disposed at a position lower than the feed opening 223 of the upper grill unit 22. The lower grill plate 210 includes a circular plate body 3, a flow-diverging stage 5 integrally connected to the plate body 3 and disposed at a center of the plate body 3, a projecting wall unit 4 projecting upwardly from the plate body 3, and a dividing unit 6.

The plate body 3 has a central portion 31 that is positioned under and aligned with the feed opening 223, and a surrounding portion 32 that surrounds the central portion 31. The surrounding portion 32 of the plate body 3 has a base wall 321 that is inclined downwardly from the central portion 31 of the plate body 3 toward a periphery of the plate body 3, and an annular extension wall 322 that extends horizontally, that surrounds the base wall 321, and that forms the periphery of the plate body 3. The surrounding portion 32 further has a plurality of spaced-apart protruding members 323 that are disposed on and protrude upwardly from the base wall 321. In this embodiment, the protruding members 323 are cuboid in shape. Each of the protruding members 323 has an uppermost end 324 which is proximate to the flow-diverging stage 5.

The projecting wall unit 4 is integrally connected to the plate body 3, and includes an inner projecting wall 41 that projects upwardly from the annular extension wall 322.

In this embodiment, the flow-diverging stage 5 has a substantially cylindrical structure, and protrudes upwardly from the central portion 31 of the plate body 3. The flow-diverging stage 5 has a flow-diverging convex surface 52 that corresponds in position to and faces the feed opening 223 of the upper grill unit 22 and that is for diverging flow of the fluid material which flows from the feed opening 223 onto the plate body 3, and an upright surrounding surface 51 that is located under the flow-diverging convex surface 52 . More specifically, the flow-diverging convex surface 52 is a hemispheric surface, is located directly under the feed opening 223, and has a top end 521 aligned with a center of the feed opening 223 and positioned higher than any part of the plate body 3. That is, the uppermost end 324 of each of the protruding members 323 is positioned lower than the top end 521 of the flow-diverging convex surface 52 of the flow-diverging stage 5.

In this embodiment, the dividing unit 6 is disposed on and integrally connected to the plate body 3. Specifically, in this embodiment, the plate body 3, the projecting wall unit 4, the flow-diverging stage 5 and the dividing unit 6 are integrally molded as one piece. The dividing unit 6 cooperates with the surrounding portion 32 of the plate body 3 to define a plurality of space zones 30 which are adapted to receive the fluid material thereon, and in which the protruding members 323 are located. Each of the space zones 30 has a plurality of flow channels 301 formed between adjacent ones of the protruding members 323 for flow of the fluid material therein. The dividing unit 6 has a plurality of dividers 61 that are connected to and diverge from the upright surrounding surface 51 of the flow-diverging stage 5, and that are equi-angularly spaced apart from each other. Each of the dividers 61 divides a corresponding adjacent pair of the space zones 30 from each other. The dividing unit 6 of this embodiment has a cross-shaped structure, but is not limited thereto.

In greater detail, each of the dividers 61 has a first end portion 611 that is connected to the upright surrounding surface 51 of the flow-diverging stage 5, and a second end portion 612 that is opposite to the first end portion 611, that is adjacent to the inner projecting wall 41 of the projecting wall unit 4 but not connected to the inner projecting wall 41. Each of the dividers 61 further has a first notch 613 and a second notch 614 that are located between the first and second end portions 611, 612. Each of the first and second notches 613, 614 of each of the dividers 61 fluidly communicates the corresponding adjacent pair of the space zones 30 for evenly distributing the fluid material in the space zones 30.

It should be noted that the number of the notches of each of the dividers 61 is not limited. In other modification of this embodiment, the second notch 614 may be omitted. That is, each of the dividers 61 has only one first notch 613 that fluidly communicates the corresponding adjacent pair of the space zones 30. In this embodiment, for each divider 61, the first notch 613 is located at a midpoint between the first and second end portions 611, 612, and the second notch 614 is located at a midpoint between the first end portion 611 and the first notch 613.

To make a waffle, first the fluid material is poured into the feed opening 223 of the upper grill unit 22. Since the flow-diverging convex surface 52 of the flow-diverging stage 5 is located directly under the feed opening 223 and is hemispheric, the fluid material will flow downwardly from the flow-diverging convex surface 52 and spread outwardly toward the surrounding portion 32 of the plate body 3 of the lower grill plate 210 in an evenly distributing manner. Moreover, since the base wall 321 of the surrounding portion 32 of the plate body 3 is inclined downwardly toward the periphery of the plate body 3, the fluid material will spread further outward until reaching the projecting wall unit 4 with the aid of gravity. As the amount of the fluid material accumulated near the projecting wall unit 4 increases and the fluid material reaches a height level which is the same as that of the first notches 613 with respect to a horizontal plane (not shown), the fluid material may flow through the first notches 613 if the amount of the fluid material in each of the space zones 30 is different, so as to facilitate even distribution of the fluid material in the space zones 30. Afterwards, as the fluid material reaches a height level which is the same as that of the second notches 614 with respect to the horizontal plane, the same distribution effect is achieved.

In summary, the design of the flow-diverging convex surface 52 of the flow-diverging stage 5 enables the fluid material to flow and spread out more evenly on the plate body 3 of the lower grill plate 210. The first and second notches 613, 614 facilitate even distribution of the fluid material in the space zones 30. Therefore, comparing with the conventional grill device, the fluid material can be spread out more evenly and more rapidly on the lower grill plate 210 of this disclosure, thereby preventing the waffle formed from having uneven edges and ensuring the waffle to have a uniform thickness.

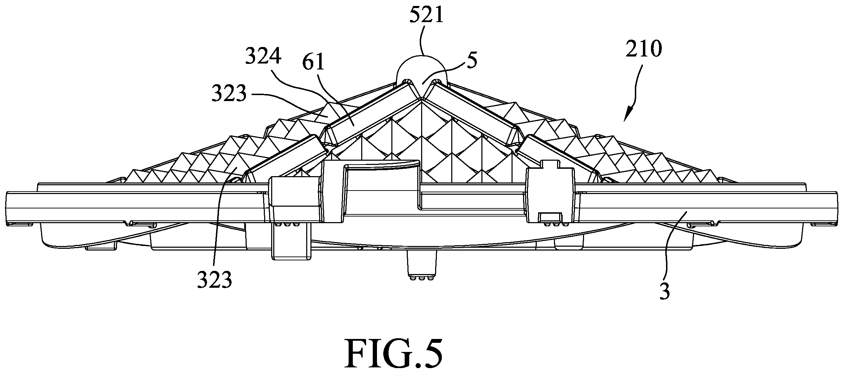

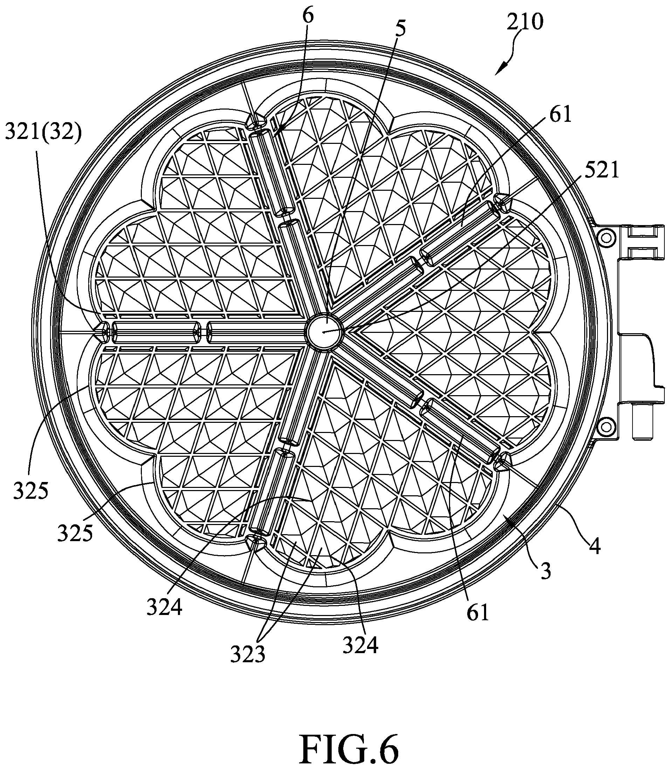

Referring to Figures 5 and 6, a second embodiment of the grill device according to the disclosure is similar to the first embodiment, the difference between the first and second embodiments resides in that the protruding members 323 of the second embodiment are pyramidal in shape. In the second embodiment, the number of the dividers 61 of the dividing unit 6 is five, and the surrounding portion 32 of the plate body 3 of the lower grill plate 210 is provided with a plurality of curved ridges 325 protruding upwardly from the base wall 321 and surrounding the protruding members 323. The ridges 325 are arranged in pairs, and each pair of the ridges 325 is disposed between two adjacent ones of the dividers 61 such that a flower pattern is formed on the lower grill plate 210.

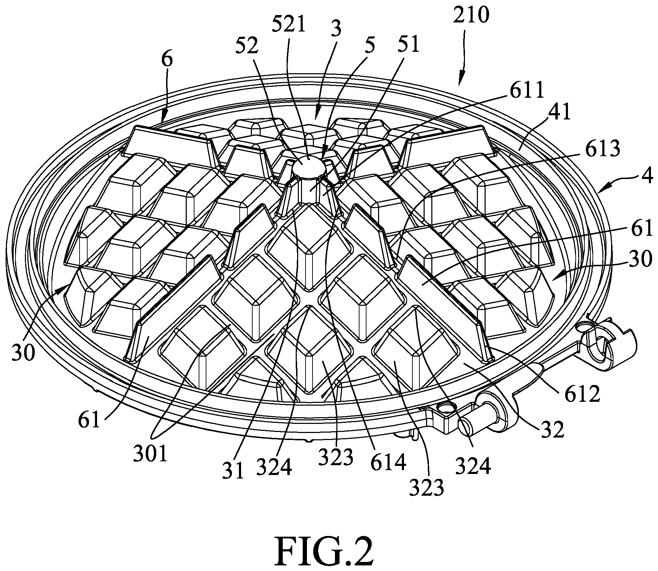

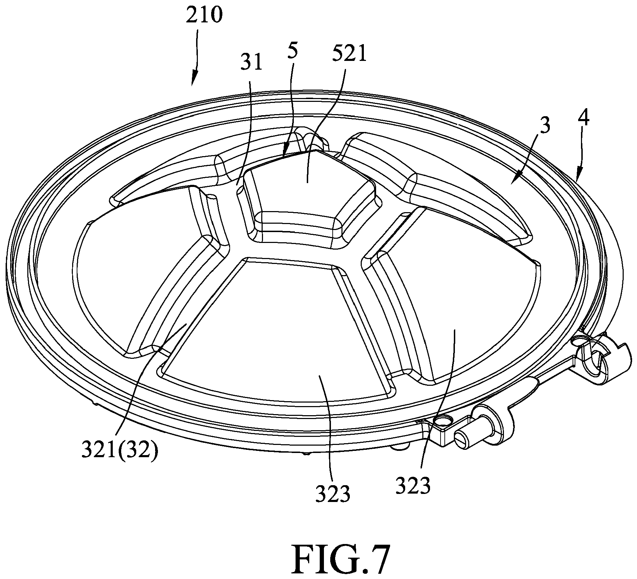

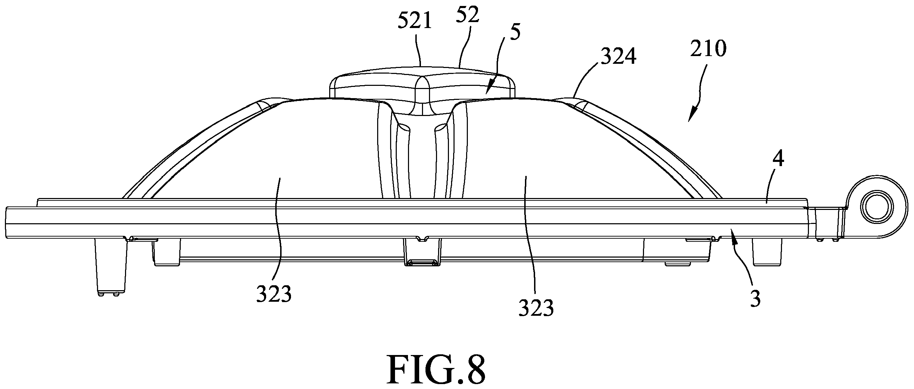

Referring to Figures 7 and 8, a third embodiment of the grill device according to the disclosure is similar to the first embodiment, the difference between the first and third embodiments resides in that in the third embodiment, the dividing unit 6 (see Figure 2) is omitted, the base wall 321 of the surrounding portion 32 of the plate body 3 cooperates with the central portion 31 to form a dome shape, and each of the protruding members 323 and the flow-diverging stage 5 is formed as a prism. The flow-diverging convex surface 52 of the third embodiment is convex toward the feed opening 223, and has the top end 521 that is positioned higher than the uppermost end 324 of each of the protruding members 323.

In the description above, for the purposes of explanation, numerous specific details have been set forth in order to provide a thorough understanding of the embodiments.

## Claims

1. A lower grill plate (210) for a grill device, said lower grill plate (210) including a plate body (3) having a central portion (31), and a surrounding portion (32) that surrounds said central portion (31), said lower grill plate (210) further including:
a flow-diverging stage (5) protruding upwardly from said central portion (31) of said plate body (3), and having a flow-diverging convex surface (52), said flow-diverging convex surface (52) having a top end (521) positioned higher than said plate body (3); and
a dividing unit (6) disposed on said plate body (3) and cooperating with said surrounding portion (32) of said plate body (3) to define a plurality of space zones (30) that are adapted to receive the fluid material thereon, said dividing unit (6) having a plurality of dividers (61) that are connected to said flow-diverging stage (5) and that are equi-angularly spaced apart from each other, each of said dividers (61) dividing a corresponding adjacent pair of said space zones (30) from each other, **characterized in that** each of said dividers (61) has a first notch (613) that fluidly communicates the corresponding adjacent pair of said space zones (30).

2. The lower grill plate (210) as claimed in claim 1, further **characterized in that**:
said flow-diverging convex surface (52) of said flow-diverging stage (5) is a hemispheric surface;
said flow-diverging stage (5) further has an upright surrounding surface (51) that is located under said flow-diverging convex surface (52); and
said dividers (61) are connected to and diverge from said upright surrounding surface (51) of said flow-diverging stage (5).

3. The lower grill plate (210) as claimed in claim 1, further **characterized in that** each of said dividers (61) further has a first end portion (611) that is connected to said flow-diverging stage (5), and a second end portion (612) that is opposite to said first end portion (611), said first notch (613) of each of said dividers (61) being located at a midpoint between said first and second end portions (611, 612).

4. The lower grill plate (210) as claimed in claim 3, further **characterized in that** each of said dividers (61) further has a second notch (614) that is located at a midpoint between said first end portion (611) and said first notch (613), and that fluidly communicates the corresponding adjacent pair of said space zones (30).

5. The lower grill plate (210) as claimed in any one of claims 1 to 4, further **characterized in that** said surrounding portion (32) of said plate body (3) has a base wall (321) that is inclined downwardly from said central portion (31) of said plate body (3) toward a periphery of said plate body (3), and a plurality of spaced-apart protruding members (323) that are disposed on said base wall (321) and that are located in said space zones (30), each of said protruding members (323) having an uppermost end (324) positioned lower than said top end (521) of said flow-diverging convex surface (52) of said flow-diverging stage (5).

6. The lower grill plate (210) as claimed in claim 5, further **characterized in that** said protruding members (323) are cuboid in shape.

7. The lower grill plate (210) as claimed in claim 5, further **characterized in that** said protruding members (323) are pyramidal in shape.

8. The lower grill plate (210) as claimed in any one of claims 5 to 7, further **characterized in that**:
said surrounding portion (32) of said plate body (3) further has an annular extension wall (322) that surrounds said base wall (321) and that forms the periphery of said plate body (3); and
said lower grill plate (210) further comprises a projecting wall unit (4) projecting upwardly from said annular extension wall (322).

9. The lower grill plate (210) as claimed in any one of claims 1 to 4, further **characterized in that** said surrounding portion (32) of said plate body (3) has a base wall (321) that surrounds said central portion (31) and that cooperates with said central portion (31) to form a dome shape, and a plurality of spaced-apart protruding members (323) that protrude upwardly from said base wall (321), each of said protruding members (323) having an uppermost end (324) positioned lower than said top end (521) of said flow-diverging convex surface (52) of said flow-diverging stage (5).

10. The lower grill plate (210) as claimed in claim 9, further **characterized in that** each of said protruding members (323) and said flow-diverging stage (5) is formed as a prism.

11. The lower grill plate (210) as claimed in claim 9 or 10, further **characterized in that**:
said surrounding portion (32) of said plate body (3) further has an annular extension wall (322) that forms a periphery of said plate body (3); and
said lower grill plate (210) further comprises a projecting wall unit (4) projecting upwardly from said annular extension wall (322).

12. A grill device including a lower grill unit (21) that includes a heating element (212), and an upper grill unit (22) that is openably connected to said lower grill unit (21) and that has a feed opening (223), said grill device being **characterized in that**:
said lower grill unit (21) further includes a lower seat (211), and a lower grill plate (210) as claimed in claim 1, said heating element (212) being disposed for heating said lower grill plate (210), said lower grill plate (210) being coupled to a top end portion of said lower seat (211), said lower grill plate (210) being disposed at a position lower than said feed opening (223), said central portion (31) of said plate body (3) being positioned under and aligned with said feed opening (223); and
said feed opening (223) corresponds in position to said flow-diverging convex surface (52) of said flow-diverging stage (5) of said lower grill plate (210), said flow-diverging convex surface (52) facing said feed opening (223) for diverging flow of a fluid material which flows from said feed opening (223) onto said plate body (3).

## Patentansprüche

1. Untere Grillplatte (210) für eine Grillvorrichtung, wobei die untere Grillplatte (210) einen Plattenkörper (3) umfasst, der aufweist einen Zentralbereich (31) und einen Umgebungsbereich (32), der den Zentralbereich (31) umgibt, wobei die untere Grillplatte (210) ferner umfasst:
eine Stromdivergenz-Plattform (5), die von dem Zentralbereich (31) des Plattenkörpers (3) nach oben vorsteht, und eine gewölbte Stromdivergenz-Oberfläche (52) aufweist, wobei die gewölbte Stromdivergenz-Oberfläche (52) ein Kopfende (521) aufweist, das höher als der Plattenkörper (3) positioniert ist; und
eine Unterteilungseinheit (6), die auf dem Plattenkörper (3) angeordnet ist und mit dem Umgebungsbereich (32) des Plattenkörpers (3) zusammenwirkt, um eine Mehrzahl von Raumzonen (30) zu bilden, die so ausgebildet sind, dass diese darauf das Fluidmaterial empfangen können, wobei die Unterteilungseinheit (6) eine Mehrzahl von Raumteilern (61) aufweist, die mit der Stromdivergenz-Plattform (5) verbunden sind und die im gleichen Winkelabschnitt zueinander angeordnet sind, wobei jeder der Raumteiler (61) ein korrespondierendes angrenzendes Paar von Raumzonen (30) voneinander trennt, **dadurch gekennzeichnet, dass** jeder der Raumteiler (61) eine erste Rille (613) aufweist, die fluidmäßig mit dem korrespondierenden angrenzenden Paar der Raumzonen (30) kommuniziert.

2. Untere Grillplatte (210) nach Anspruch 1, ferner **dadurch gekennzeichnet, dass**:
die gewölbte Stromdivergenz-Oberfläche (52) der Stromdivergenz-Plattform (5) eine halbkugelförmige Oberfläche ist;
wobei die Stromdivergenz-Plattform (5) ferner eine senkrechte Umgebungsfläche (51) aufweist, die unter der gewölbten Stromdivergenz-Oberfläche (52) angeordnet ist; und
die Raumteiler (61) mit der senkrechten Umgebungsfläche (51) der Stromdivergenz-Plattform (5) verbunden sind und von dieser divergieren.

3. Untere Grillplatte (210) nach Anspruch 1, ferner **dadurch gekennzeichnet, dass** jeder der Raumteiler (61) ferner aufweist einen ersten Endabschnitt (611), der mit der Stromdivergenz-Plattform (5) verbunden ist, und einen zweiten Endbereich (612), der dem ersten Endbereich (611) gegenüber liegt, wobei die erste Rille (613) jeder der Raumteiler (61) an einem Mittelpunkt zwischen dem ersten und zweiten Endbereich (611, 612) angeordnet ist.

4. Untere Grillplatte (210) nach Anspruch 3, ferner **dadurch gekennzeichnet, dass** jeder der Raumteiler (61) ferner eine zweite Rille (614) hat, die an einem Mittelpunkt zwischen dem ersten Endbereich (611) und der zweiten Rille (613) angeordnet ist und das korrespondierende angrenzende Paar von Raumzonen (30) fluidmäßig verbindet.

5. Untere Grillplatte (210) nach einem der Ansprüche 1 bis 4, ferner **dadurch gekennzeichnet, dass** der Umgebungsbereich (32) des Plattenkörpers (3) aufweist eine Grundwand (321), die von dem Zentralbereich (31) des Plattenkörpers (3) in Richtung eines Umfangs des Plattenkörpers (3) schräg nach unten geneigt ist, und eine Mehrzahl von in Abstand zueinander liegende, vorstehende Elemente (323), die auf der Grundwand (321) angeordnet sind und die in den Raumzonen (30) angeordnet sind, wobei jedes der vorstehenden Elemente (323) ein oberstes Ende (324) hat, das tiefer als das Kopfende (521) der gewölbten Stromdivergenz-Oberfläche (52) der Stromdivergenz-Plattform (5) positioniert ist.

6. Untere Grillplatte (210) nach Anspruch 5, ferner **dadurch gekennzeichnet, dass** die vorstehenden Elemente (323) quaderförmig gestaltet sind.

7. Untere Grillplatte (210) nach Anspruch 5, ferner **dadurch gekennzeichnet, dass** die vorstehenden Elemente (323) pyramidenförmig gestaltet sind.

8. Untere Grillplatte (210) nach einem der Ansprüche 5 bis 7, ferner **dadurch gekennzeichnet, dass**:
der Umgebungsbereich (32) des Plattenkörpers (3) ferner eine ringförmige Erstreckungswand (322) aufweist, welche die Grundwand (321) umgibt und welche den Umfang des Plattenkörpers (3) bildet; und
wobei die untere Grillplatte (210) ferner eine vorspringende Wandeinheit (4) umfasst, die von der ringförmigen Erstreckungswand (322) nach oben vorspringt.

9. Untere Grillplatte (210) nach einem der Ansprüche 1 bis 4, ferner **dadurch gekennzeichnet, dass** der Umgebungsbereich (32) des Plattenkörpers (3) aufweist eine Grundwand (321), welche den Zentralbereich (31) umgibt und welche mit dem Zentralbereich (31) so kooperiert, dass eine Kuppelform gebildet wird, und eine Mehrzahl von in Abstand zueinander angeordnete vorstehende Elemente (323), die von der Grundwand (321) nach oben vorstehen, wobei jedes der vorstehenden Elemente (323) ein oberstes Ende (324) hat, das tiefer als das Kopfende (521) der gewölbten Stromdivergenz-Oberfläche (52) der Stromdivergenz-Plattform (5) positioniert ist.

10. Untere Grillplatte (210) nach Anspruch 9, ferner **dadurch gekennzeichnet, dass** jedes der vorstehenden Elemente (323) und die Stromdivergenz-Plattform (5) als ein Prisma geformt ist.

11. Untere Grillplatte (210) nach Anspruch 9 oder 10, ferner **dadurch gekennzeichnet, dass**:
der Umgebungsbereich (32) des Plattenkörpers (3) ferner eine ringförmige Erstreckungswand (322) hat, die einen Umfang des Plattenkörpers (3) bildet; und
die untere Grillplatte (210) ferner eine vorspringende Wandeinheit (4) umfasst, welche von der ringförmigen Erstreckungswand (322) aus nach oben vorspringt.

12. Grillvorrichtung mit einer unteren Grilleinheit (21), die ein Heizelement (212) umfasst, und einer oberen Grilleinheit (22), die mit der unteren Grilleinheit (21) in zu öffnender Weise verbunden ist und die eine Zugangsöffnung (223) hat, wobei die Grillvorrichtung **dadurch gekennzeichnet ist, dass**:
die untere Grilleinheit (21) ferner umfasst einen unteren Sitz (211) und eine untere Grillplatte (210) nach Anspruch 1, wobei das Heizelement (212) zum Heizen der unteren Grillplatte (210) angeordnet ist, wobei die untere Grillplatte (210) mit einem oberen Endbereich des unteren Sitzes (211) gekoppelt ist, wobei die untere Grillplatte (210) an einer tieferen Position als die Zugangsöffnung (223) angeordnet ist, wobei der Zentralbereich (31) des Plattenkörpers (3) unter der Zugangsöffnung (223) positioniert und mit dieser ausgerichtet ist; und
wobei die Zugangsöffnung (223) in ihrer Position mit der gewölbten Stromdivergenz-Oberfläche (52) der Stromdivergenz-Plattform (5) der unteren Grillplatte (210) korrespondiert, wobei die gewölbte Stromdivergenz-Oberfläche (52) der Zugangsöffnung (223) zugewandt ist, um einen Strom aus Fluidmaterial, welches aus der Zugangsöffnung (223) auf den Plattenkörper (3) fließt, zu divergieren.

## Revendications

1. Plaque de gril inférieure (210) pour un dispositif de gril, ladite plaque de gril inférieure (210) comportant un corps de plaque (3) ayant une partie centrale (31) et une partie de pourtour (32) qui entoure ladite partie centrale (31), ladite plaque de gril inférieure (210) comportant en outre :
un étage de divergence d'écoulement (5), faisant saillie vers le haut à partir de ladite partie centrale (31) dudit corps de plaque (3), et ayant une surface convexe de divergence d'écoulement (52), une extrémité de sommet (521) de ladite surface convexe de divergence d'écoulement (52) étant positionnée plus haut que ledit corps de plaque (3) ; et
une unité de division (6) disposée sur ledit corps de plaque (3) et coopérant avec ladite partie de pourtour (32) dudit corps de plaque (3) pour définir une pluralité de zones d'espaces (30) qui sont adaptées pour recevoir, sur celles-ci, la matière fluide, ladite unité de division (6) disposant d'une pluralité de diviseurs (61) qui sont reliés audit étage de divergence d'écoulement (5) et qui sont espacés à un même angle les uns des autres, chacun desdits diviseurs (61) divisant une paire adjacente correspondante desdites zones d'espaces (30), l'une par rapport l'autre, **caractérisée en ce que** chacun desdits diviseurs (61) dispose d'une première encoche (613) qui assure une communication fluidique avec la paire adjacente correspondante desdites zones d'espaces (30).

2. Plaque de gril inférieure (210) comme revendiquée dans la revendication 1, **caractérisée en outre en ce que** :
ladite surface convexe de divergence d'écoulement (52) dudit étage de divergence d'écoulement (5) est une surface hémisphérique ;
ledit étage de divergence d'écoulement (5) présente en outre une surface de pourtour droite (51), qui est située sous ladite surface convexe de divergence d'écoulement (52) ; et
lesdits diviseurs (61) sont reliés à ladite surface de pourtour droite (51) dudit étage de divergence d'écoulement (5), et divergents à partir de celle-ci.

3. Plaque de gril inférieure (210) comme revendiquée dans la revendication 1, **caractérisée en outre en ce que** chacun desdits diviseurs (61) présente en outre une première partie d'extrémité (611) qui est reliée audit étage de divergence d'écoulement (5), et une deuxième partie d'extrémité (612) qui est opposée à ladite première partie d'extrémité (611), ladite première encoche (613) de chacun desdits diviseurs (61) étant située à un point médian entre lesdites première et deuxième parties d'extrémité (611, 612).

4. Plaque de gril inférieure (210) comme revendiquée dans la revendication 3, **caractérisée en outre en ce que** chacun desdits diviseurs (61) présente en outre une deuxième encoche (614) qui est située à un point médian entre ladite première partie d'extrémité (611) et ladite première encoche (613), et qui assure une communication fluidique avec la paire adjacente correspondante desdites zones d'espaces (30).

5. Plaque de gril inférieure (210) comme revendiquée dans l'une quelconque des revendications 1 à 4, **caractérisée en outre en ce que** ladite partie de pourtour (32) dudit corps de plaque (3) dispose d'une paroi de base (321), qui est inclinée vers le bas, à partir de ladite partie centrale (31) dudit corps de plaque (3) vers une périphérie dudit corps de plaque (3), et d'une pluralité d'organes saillants (323) espacés, qui sont disposés sur ladite paroi de base (321) et qui sont situés dans lesdites zones d'espaces (30), une extrémité la plus haute (324) de chacun desdits organes saillants (323) étant positionnée plus bas que ladite extrémité de sommet (521) de ladite surface convexe de divergence d'écoulement (52) dudit étage de divergence d'écoulement (5).

6. Plaque de gril inférieure (210) comme revendiquée dans la revendication 5, **caractérisée en outre en ce que** lesdits organes saillants (323) sont de forme cubique.

7. Plaque de gril inférieure (210) comme revendiquée dans la revendication 5, **caractérisée en outre en ce que** lesdits organes saillants (323) sont de forme pyramidale.

8. Plaque de gril inférieure (210) comme revendiquée dans l'une quelconque des revendications 5 à 7, **caractérisée en outre en ce que** :
ladite partie de pourtour (32) dudit corps de plaque (3) présente en outre une paroi d'extension annulaire (322) qui entoure ladite paroi de base (321) et qui forme la périphérie dudit corps de plaque (3) ; et
ladite plaque de gril inférieure (210) comprend en outre une unité de paroi saillante (4), faisant saillie vers le haut à partir de ladite paroi d'extension annulaire (322).

9. Plaque de gril inférieure (210) comme revendiquée dans l'une quelconque des revendications 1 à 4, **caractérisée en outre en ce que** ladite partie de pourtour (32) dudit corps de plaque (3) dispose d'une paroi de base (321), qui entoure ladite partie centrale (31) et qui coopère avec ladite partie centrale (31) pour former une forme de dôme, et d'une pluralité d'organes saillants (323) espacés, qui font saillie vers le haut à partir de ladite paroi de base (321), une extrémité la plus haute (324) de chacun desdits organes saillants (323) étant positionnée plus bas que ladite extrémité de sommet (521) de ladite surface convexe de divergence d'écoulement (52) dudit étage de divergence d'écoulement (5).

10. Plaque de gril inférieure (210) comme revendiquée dans la revendication 9, **caractérisée en outre en ce que** chacun desdits organes saillants (323) et dudit étage de divergence d'écoulement (5) est formé comme un prisme.

11. Plaque de gril inférieure (210) comme revendiquée dans la revendication 9 ou 10, **caractérisée en outre en ce que** :
ladite partie de pourtour (32) dudit corps de plaque (3) dispose en outre d'une paroi d'extension annulaire (322) qui forme une périphérie dudit corps de plaque (3) ; et
ladite plaque de gril inférieure (210) comprend en outre une unité de paroi saillante (4), faisant saillie vers le haut à partir de ladite paroi d'extension annulaire (322).

12. Dispositif de gril comportant une unité de gril inférieure (21) qui comporte un élément chauffant (212), et une unité de gril supérieure (22) qui est reliée de manière ouverte à ladite unité de gril inférieure (21), et qui dispose d'une ouverture d'alimentation (223), ledit dispositif de gril étant **caractérisé en ce que** :
ladite unité de gril inférieure (21) comporte en outre un siège inférieur (211) et une plaque de gril inférieure (210) comme revendiquée dans la revendication 1, ledit élément chauffant (212) étant disposé pour chauffer ladite plaque de gril inférieure (210), ladite plaque de gril inférieure (210) étant couplée à une partie d'extrémité de sommet dudit siège inférieur (211), ladite plaque de gril inférieure (210) étant disposée à une position plus basse que ladite ouverture d'alimentation (223), ladite partie centrale (31) dudit corps de plaque (3) étant positionnée sous ladite ouverture d'alimentation (223) et alignée avec celle-ci ; et
ladite ouverture d'alimentation (223) correspond en position à ladite surface convexe de divergence d'écoulement (52) dudit étage de divergence d'écoulement (5) de ladite plaque de gril inférieure (210), ladite surface convexe de divergence d'écoulement (52) faisant face à ladite ouverture d'alimentation (223) pour faire diverger l'écoulement d'une matière fluide qui s'écoule à partir de ladite ouverture d'alimentation (223) sur ledit corps de plaque (3).
